# EUROPEAN PATENT APPLICATION

(11) **EP 2 848 893 A1**
(43) Date of publication of application: **18.03.2015**
(21) Application number: 14179776.1
(22) Date of filing: 05.08.2014
(51) Int. Cl.: G01C 21/34, H04L 12/58, G01C 21/36, G06F 17/30

(54) **Navigation via recorded paths**

(30) Priority: 11.09.2013 IN CH40652013
(71) Applicant: Nokia Corporation, 02610 Espoo (FI)
(72) Inventor: Mishra, Pranav, 560037 Bangalore (IN)
(74) Representative: Nokia Corporation

(57) **Abstract**

In one implementation, a contact database stores a list of contacts. One or more of the contacts may be associated with a prerecorded path, which is a set of directions for traveling to a destination specified by the contact. The contact database may be stored as a contact list of a phone. The contact database may be a social networking service. Another user sends a destination request including a destination. The contact database is searched based on the destination request to retrieve the prerecorded path. The prerecorded path may be played for the user. The prerecorded path may be combined with other directions from a geographic database.

## Description

### TECHNICAL FIELD

The following disclosure relates to navigation, or more particularly, navigation augmented with pre-recorded paths.

### BACKGROUND

Navigation systems provide end users with various navigation-related functions and features. For example, some navigation systems determine an optimum route to travel along a road network from an origin location to a destination location in a geographic region. Using input from the end user, the navigation system may examine various potential routes between the origin location and the destination location to determine the optimum route. The navigation system may provide the end user with information about the optimum route in the form of guidance that identifies the maneuvers required to be taken by the end user to travel from the origin to the destination location. Some navigation systems are able to show detailed maps on displays outlining the route, the types of maneuvers to be taken at various locations along the route, locations of certain types of features, and so on.

Navigation systems may use geographic data in the form of one or more geographic databases that include data representing physical features in the geographic region. However, the geographic data may be incomplete. Navigation systems are limited by the extent of the completeness of the geographic data.

### SUMMARY

In an embodiment, a contact database stores a list of contacts. One or more of the contacts may be associated with a prerecorded path, which is a set of directions for traveling to a destination specified by the contact. The contact database may be stored as a contact list of a phone. The contact database may be a social networking service. Another user sends a destination request including a destination. The contact database is searched based on the destination request to retrieve the prerecorded path. The prerecorded path may be played for the user. The prerecorded path may be combined with other directions from a geographic database.

### BRIEF DESCRIPTION OF THE DRAWINGS

Exemplary embodiments of the present invention are described herein with reference to the following drawings.
Figure 1 illustrates an example system for augmenting navigation with a recorded path.
Figure 2 illustrates an example set of geographic data including a recorded path.
Figure 3 illustrates an example set of geographic data including a route to the recorded path of Figure 2.
Figure 4 illustrates another example set of geographic data including a route to the recorded path of Figure 2.
Figure 5 illustrates an example contact file including a recorded path.
Figure 6 illustrates an example map data from the contact file of Figure 5.
Figure 7 illustrates an example contact file including an indoor recorded path.
Figure 8 illustrates an exemplary mobile device of the system of Figure 1.
Figure 9 illustrates an exemplary server of the system of Figure 1.
Figure 10 illustrates an example flowchart for augmenting navigation with a recorded path.

### DETAILED DESCRIPTION

Navigation systems and geographic databases are updated over time as geographic objects, such as paths or points of interests, change. The objects may be added, removed, moved, or modified. A geographic database may be out of date in some respect before the time a new version of the geographic database can be compiled or distributed. One area of particular concern includes missing portions of a route. For example, the last segment in a route to a particular destination is often missing.

The last segment of a route is often the least traveled segment. The last segment may be a private road or a path outside of the typical road classifications. For example, the last segment may be a private drive that leads to a point of interest, the last segment may be in a network of paths within a complex or a campus, or the last segment may be a newly constructed road. The last segment may be outside of the scope of the geographic database. For example, the geographic database may provide routing to an office building or campus but may not include a pedestrian path or an indoor path to the final destination within the office building or campus.

The following embodiments include methods and systems for generating navigation routes to destinations including a last segment that is not included in the geographic database. The last segment may be added to the route through a prerecorded path. The prerecorded path may include segments in the same format as the geographic database. For example, when the prerecorded path is recorded by traversing the path using a mobile device, the travel of the mobile device may be converted to the format of the geographic database. The prerecorded path may include audio or video that may have been recorded by speaking directions for the path. The prerecorded path may include turn by turn directions.

The prerecorded path may be distributed from the creator of the prerecorded path to the navigation system through a variety of techniques. The creator may remain tied to, and responsible for, the prerecorded path. For example, the prerecorded path may be associated with a contact file for the creator of the prerecorded path.

In another embodiment, rather than a prerecorded path, a contact file may include POI information. That is, the creator of the contact file may mark a POI without recording the path to the POI. The POI may be stored along with geographic coordinates in the contact file for displayed on a map. For example, users may record the geographic locations of home and work in contact files. Other users may retrieve the locations, and the navigation system may independent calculate routing to the locations.

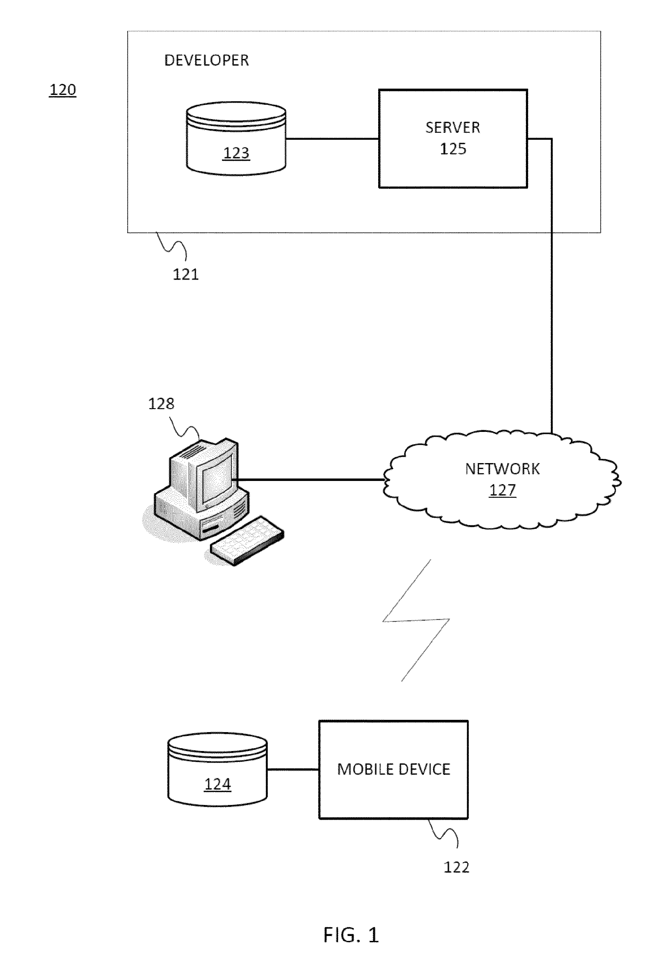

Figure 1 illustrates an example navigation system 120 for augmenting navigation with a recorded path. The navigation system 120 includes a developer system 121, a mobile device 122, a workstation 128, and a network 127. The mobile device 122 may be coupled with a local database 124. The developer system 121 includes a server 125 and a remote database 123. The developer system 121 may include computer systems and networks of a system operator (e.g., NAVTEQ or Nokia Corp.). Additional, different, or fewer components may be provided. For example, many mobile devices 122 and/or workstations 128 connect with the network 127.

The navigation system serves end users (e.g., pedestrians, vehicle drivers and passengers, as well as other persons) to provide navigation-related services (including map-related services) with respect to a geographic region. The navigation-related services include information about travel along a path network (road network and/or pedestrian network), including route calculation and guidance, people and business finding services, maps, point of interest searching, destination selection, and other information. A geographic database is stored on a non-transitory computer readable storage medium or any computer storage that is accessible to the server 125, such as remote database 123, or local database 124. The geographic database may be organized to facilitate performing navigation-related functions.

A navigation-related service receives a destination request. In one example, the request is received from the user at the mobile device 122 and also received at the server 125 from the mobile 122 via the network 127. The destination request may specify a street address, a business name, an indoor location, or a point of interest. The destination request may be associated with another user (e.g., a home address of the user or a business of the user).

A contact database is searched based on the destination request. The contact database may be included in the local database 124 or the remote database 123. The contact database includes a lookup table of prerecorded paths. The prerecorded paths may be indexed in the lookup table by destination name, destination address, associated contact, business name, or creator name. The contact database may be searched in lieu of or in combination with the geographic database, which also may be included in the local database 124 or the remote database 123. The contact database may be searched in response to the destination being omitted from the geographic database.

The mobile device 122 receives the prerecorded path that is associated with the destination request from the contact database either directly from local database 124 or indirectly through network 127 and/or server 125. Alternatively, the server 125 receives the prerecorded path that is associated with the destination request from the contact database. Either the mobile device 122 or the server 125 is configured to calculate a route to the destination including the prerecorded path.

The mobile device 122 is a smart phone, a mobile phone, a personal digital assistant ("PDA"), a tablet computer, a notebook computer, a personal navigation device ("PND"), a portable navigation device, and/or any other known or later developed portable or mobile computing device. The mobile device 122 includes one or more detectors or sensors as a positioning system built or embedded into or within the interior of the mobile device 122. The mobile device 122 receives location data from the positioning system. The location data may be measured with sensors, such as a global positioning system (GPS) or another satellite based positioning. The sensors may include inertial sensors (e.g., accelerometer and/or gyroscopes). The sensors may include a magnetometer.

The optional workstation 128 is a general purpose computer including programming specialized for the following embodiments. For example, the workstation 128 may receive user inputs for recording the prerecorded paths. The workstation 128 may receive user inputs for selecting origins and destinations for map-related services. The workstation 128 includes at least a memory, a processor, and a communication interface.

The developer system 121, the workstation 128, and the mobile device 122 are coupled with the network 127. The phrase "coupled with" is defined to mean directly connected to or indirectly connected through one or more intermediate components. Such intermediate components may include hardware and/or software-based components. The computing resources may be divided between the server 125 and the mobile device 122.

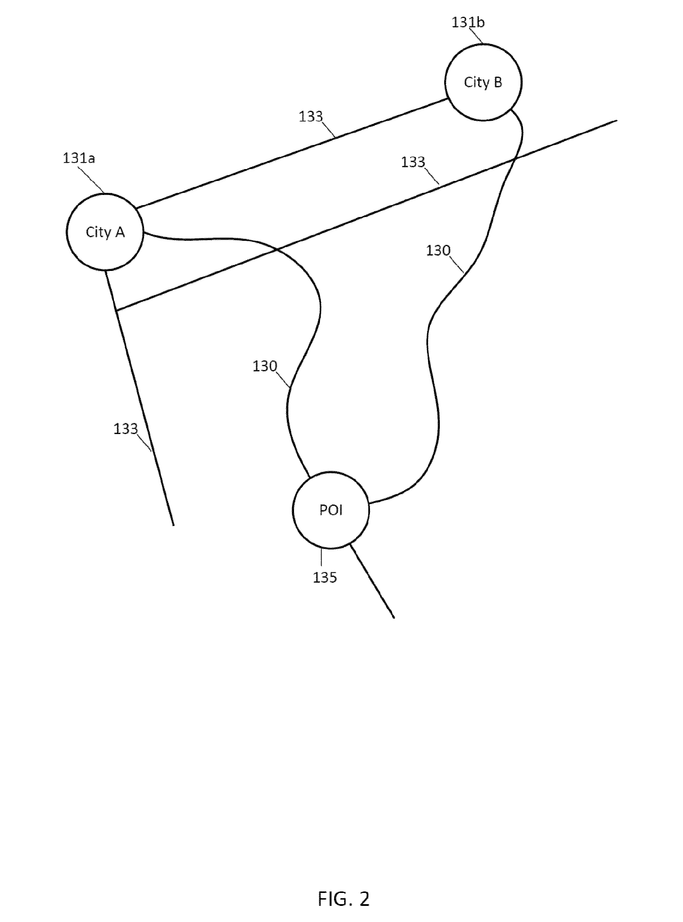

Figure 2 illustrates an example set of geographic data including prerecorded paths 130. In this example, the geographic database includes path segments 133 and cities 131a-b. Various destinations along the path segments 133 and/or within cities 131a-b may be included in the geographic database. However, the point of interest (POI) 135 is not included in the geographic database. Alternatively, the POI 135 may be included in the geographic database but none of the paths 133 extend to the POI 135. In another example, the POI 135 is included in the geographic database but designated as associated with personalized prerecorded path.

In one example, the POI 135 may be accessible only through a path that is not included in the geographic database. For example, the POI 135 may be an address within an apartment complex. The geographic database may be able to lead the user to the apartment complex but not to a specific building. Other examples of large campuses with addresses that may be omitted from standard geographic data sets include a shopping mall, an industrial complex, a park, a campground, a recreation area, an airport, a base of the armed forces, a fair or exposition site, a farm, a resort, or other sites. The sites may have navigable roads but lack public addresses along those roads. In another example, the sites may be temporary. For example, a road may be built for a construction site or an event and removed at a later date.

Using only the geographic database, the navigation system 120 can provide directions only to one of the paths 133 that is near the POI 135. The navigation system 120 may be configured to identify that the POI 135 is inaccessible from paths in the geographic database or identify that the POI is not included in the geographic database. However, the navigation system 120 is configured to access one or more prerecorded paths 130 to provide more precise guidance to the POI 135.

The navigation system 120 may be configured to search the contact database directly, search the contact database in response to an omission in the geographic database, search the contact database and the geographic database in response to the request from the user, or search only the geographic database unless an additional request is received to search the contact database.

In one example, based on the destination request for POI 135, the navigation system 120 may determine that POI 135 is omitted from the geographic database. In response to the omission, the navigation system 120 may be configured to search for POI 135 in the contact database to retrieve one or more prerecorded paths 130 to provide more precise guidance to the POI 135. Alternatively, the POI 135 is omitted from the geographic database but the geographic database includes roads leading to the POI 135. The navigation system 120 may be configured to search for the POI 135 in the contact database to retrieve the geographic coordinates of the POI 135. The navigation system 120 is configured to calculate routing to the coordinates of the POI 135 using the geographic database.

In another example, based on the destination request for POI 135, the navigation system 120 may search both the contact database and the geographic database. The searched may be in series or in parallel. A different result list may be returned from the respective databases. For example, a list of potential POIs are returned from the geographic database and another list of potential POIs are returned from the contact database. The user may select the desired POI from the lists of potential POIs. When the user selects from the list from the geographic database, routing is provided by the geographic database. When the user selected from the list from the contact database, the contact database provides one or more prerecorded paths 130.

In another example, the navigation system 120 may search the geographic database to determine whether the request POI 135 is included. When the POI 135 is included, routing may be provided from the geographic database and the contact database may not be searched. When the POI 135 is not included, the contact database is searched and provides one or more recorded paths 130 related to the POI 135. In addition, in either case, even when the POI 135 is included in the geographic database, or a close result is returned, the user may request additional information related to the POI 135. The contact database is searched in response to the request for additional information. The additional information may be provided automatically without a user input. The additional information may be pedestrian routing or indoor routing.

The prerecorded path 130 may be provided by a user that is an owner, member, or otherwise associated with the POI 135. The prerecorded path may be recorded manually, automatically or through recorded instruction.

A prerecorded path may be entered manually on the mobile device 122 or workstation 128. The owner of the prerecorded path may enter individual directions (e.g., follow the gravel road to the stop sign, or turn right at the picnic shelter). The prerecorded path may be formed of predetermined direction choices that are selected (e.g., turn right in 100 meters). The predetermined direction choices may include a drop down list for direction (e.g., north, south, east, west, left, right, or other directions) and a scroll bar range for distances using multiple units (e.g., feet, yards, meters, kilometers, miles, or other units). The prerecorded path may be submitted through a website or a mobile application. The path may be presented to a user in the navigation application or supplied as text or graphics in the same format as entered by the owner of the prerecorded path.

A prerecorded path may be entered automatically. For example, the mobile device 122 may record the path while traveling the path. A user may initiate a recording process by entered a start command on the mobile device 122. The user then travels the path. The mobile device 122 records the path using one or more sensors in a positioning sensor array. The positioning sensor array may include a global positioning system (GPS) or another satellite based positioning. The sensors may include inertial sensors (e.g., accelerometer and/or gyroscopes). The sensors may include a magnetometer or compass.

A prerecorded path may be entered using audio or video. The user may verbally explain how to travel the path by speaking or acting out navigation directions. The audio or video file may be recorded by the mobile device 122, workstation 128, or another device. The audio or video file may be uploaded through a website or a mobile application and associated with the recorded path. The audio or video file may be played at locations at or in the vicinity of where the audio or video file was recorded.

Various techniques are available for storing and accessing the prerecorded path. The prerecorded path may be stored in a contact list. The contact list may be stored in the local database 124 of the mobile device 122. The contact list includes names and contact information for a list of known entities. Thus, the user of mobile device 122 may have access to recorded paths created by contacts of the user. The contact list may include contact cards or contact files, one or more of which include a contact name, a contact number or address, and a prerecorded path instruction. The user of the mobile device 122 may search the contact list of the mobile device 122 to access a prerecorded path.

Another example contact list is accessed from a social network service. The social network service may include webpages or entries for individuals or businesses. The webpages may be supplemented with prerecorded paths including navigation directions for the individuals or business associated with the webpages.

Another example contact list is accessed from a specialized mobile application for distributing prerecorded navigation paths. The mobile application may be a navigation application. Registered users may be authenticated to gain access to the entry for a particular point of interest or addresses. The authenticated users may be given access to upload a prerecorded path to the entry. Other users, such as the user of the mobile device 122, may download the mobile application. The point of address or destination may be selected to receive the prerecorded path stored in the entry.

Another example contact list is included in an email application. An electronic business card (e.g., vCard) may be sent from one user to another using the email application. The vCard includes a prerecorded path. A navigation application may be configured to automatically access the contact list to retrieve the electronic business card including the prerecorded path. Alternatively, the navigation application may access the electronic business card including the prerecorded path in response to a search in the navigation application for the destination or the user.

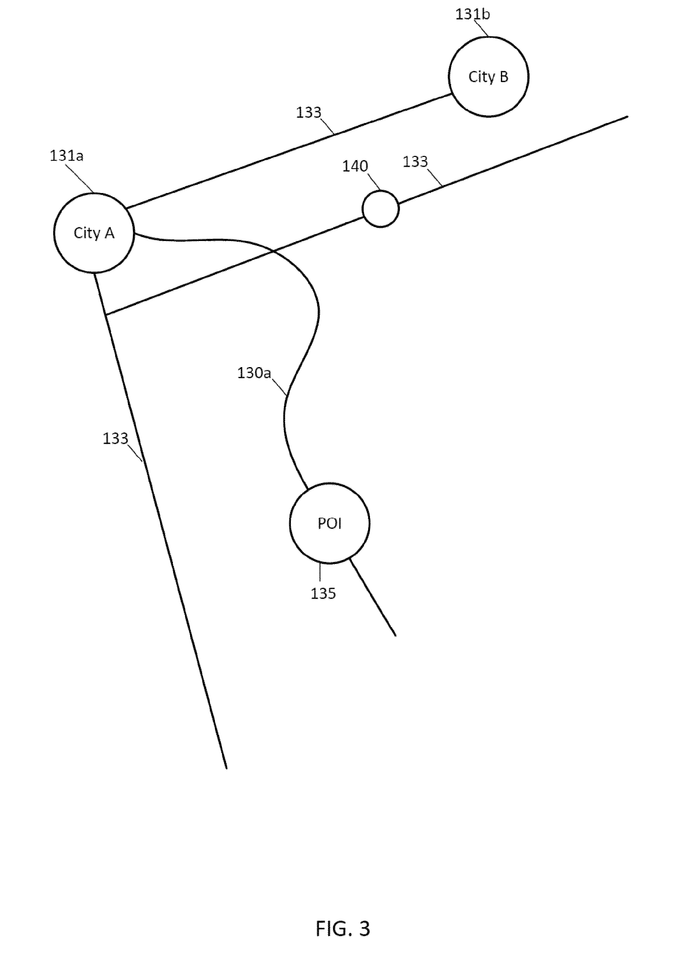

Figure 3 illustrates an example set of geographic data including a route to the recorded path of Figure 2. The navigation system 120 (e.g., mobile device 122 or server 125) receives a request for navigation to a destination. The destination request may include the name of a contact or the name of a destination. The navigation system 120 is configured to access the prerecorded path through one of the techniques discussed above or another technique.

The navigation system 120 is configured to identify a current location 140 of the mobile device 122. Consider the example where the destination request identifies POI 135. The contact file for the POI 135 includes data indicative of prerecorded path 130a. The navigation system 120 calculates the shortest distance to the prerecorded path 130a. In one example, the shortest distance may be calculated algebraically or geometrically using a coordinate system or longitude and latitude values.

In another example, the navigation system 120 identifies one or more intersections between the prerecorded path 130a and paths in the geographic database. If only one intersection between the prerecorded path 130a and paths in the geographic database is found, the navigation system provides routing to that point. If multiple intersections between the prerecorded path 130a and paths in the geographic database are found, the navigation system 120 selects a single point. The navigation system 120 may compare possible routes to the intersection points and select the shortest or quickest route. Alternatively, the navigation system may select a route to an intersection path that avoids construction, highways, or traffic.

When the user reaches the intersection point with the prerecorded path, the mobile device 122 delivers the prerecorded path to the user. The entire prerecorded path may be provided. However, in some examples, the display is changed based on the closest intersection point that is selected. Thus, the display of the prerecorded path depends on which of the multiple intersection points is selected.

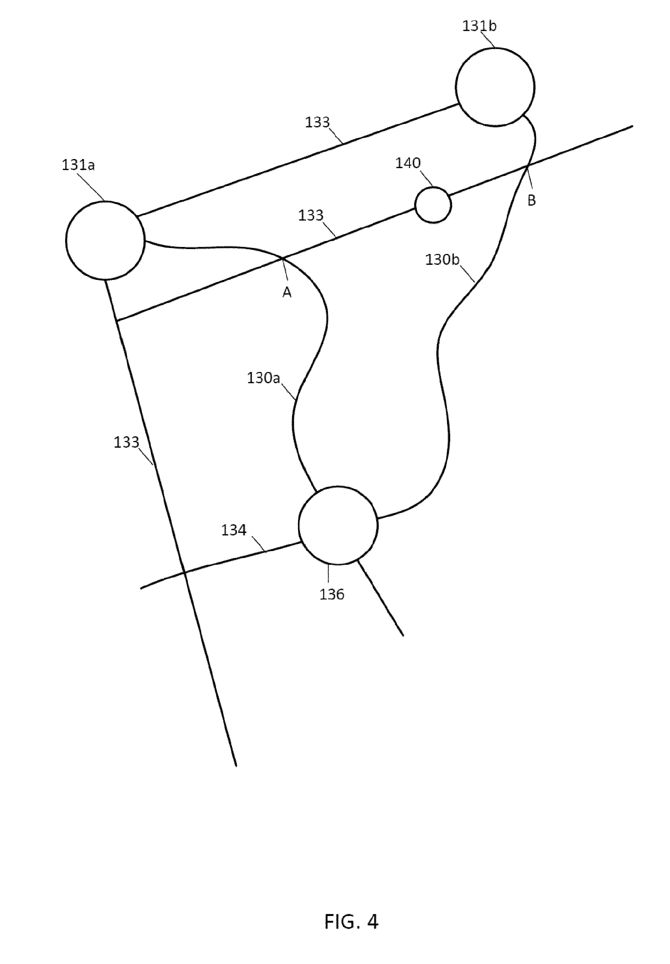

Figure 4 illustrates another example set of geographic data including multiple recorded path routes to the destination 136. The navigation system 120 accesses the contact list to receive the prerecorded path 130a and prerecorded path 130b. The navigation system 120 may select the prerecorded path by comparing the current location to the possible prerecorded paths to select the shortest overall route. Alternatively, the prerecorded path may be selected based on traffic, weather, or construction. Therefore, in the example illustrated in Figure 4, the navigation system 120 selects prerecorded path 130a through point A.

Alternatively, the navigation system 120 may not have data for the length of the possible prerecorded paths. In this scenario, the navigation system 120 may be configured to select the prerecorded path that is closest to the current location 140. Therefore, in the example illustrated in Figure 4, the navigation system selects prerecorded path B through point B because point B is closer to the current location 140 than point A is to the current position 140.

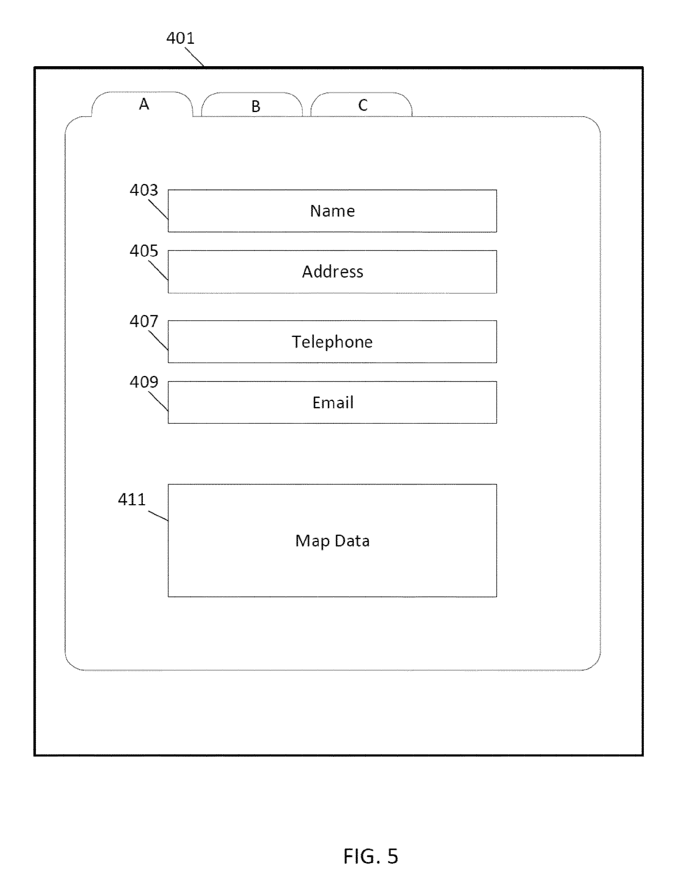

Figure 5 illustrates an example contact file 401 including a recording path. The contact file 401 may be an electronic business card. The contact file 401 may include a name field 403, an address field 405, a telephone number field 407, and/or an email field 409. The contact file 401 includes map data 411. The map data 411 may include a link which shows the location of the user. In another example, the map data 411 may be an offline map. The offline map is a static map illustrating the prerecorded path. The map data 411 may be a file in a predetermined map format (e.g., .NAV). The map format may describe the prerecorded path to the navigation application (e.g., Nokia Drive).

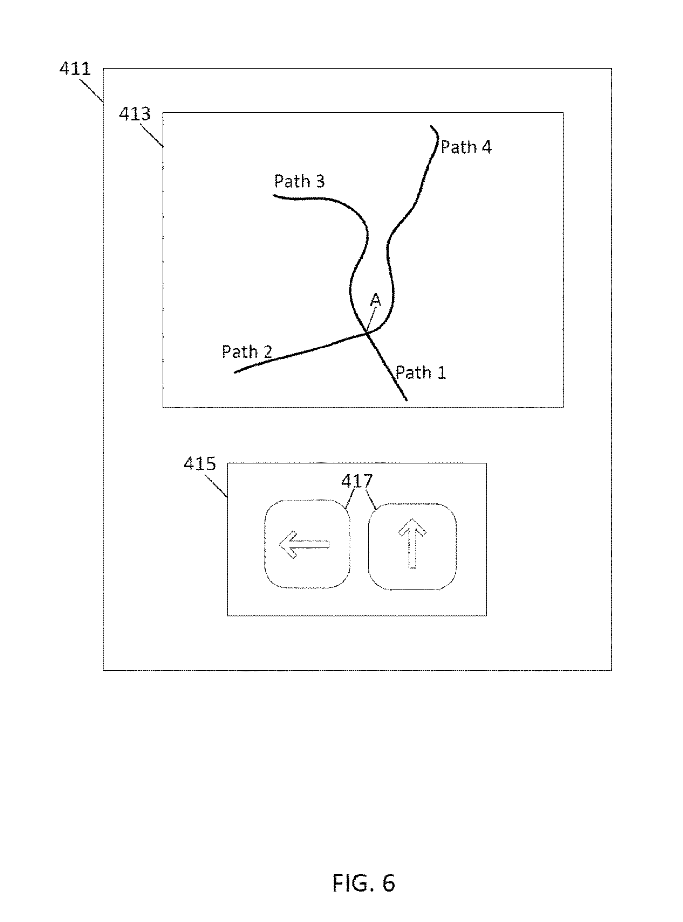

Figure 6 illustrates an example map data 411 from the contact file 401. The map data 411 is associated with either the name or address of the contact file 401. The map data 411 may include a graphical map 413 of one more prerecorded paths and/or navigation instructions 415. The example graphical map 413 may include multiple paths or multiple segments (e.g., paths 1-4) to a destination D associated with the contact file 401 from the contact database. The navigation instructions 415 may include directional arrows and alphanumeric descriptions of turn by turn directions for the route.

The mobile device 122 may store multiple contact files in a contact list. A user may access a prerecorded path direction from the contact file via the navigation application. In response to selection of the prerecorded path, the mobile device 122 may provide navigation instructions using the prerecorded path.

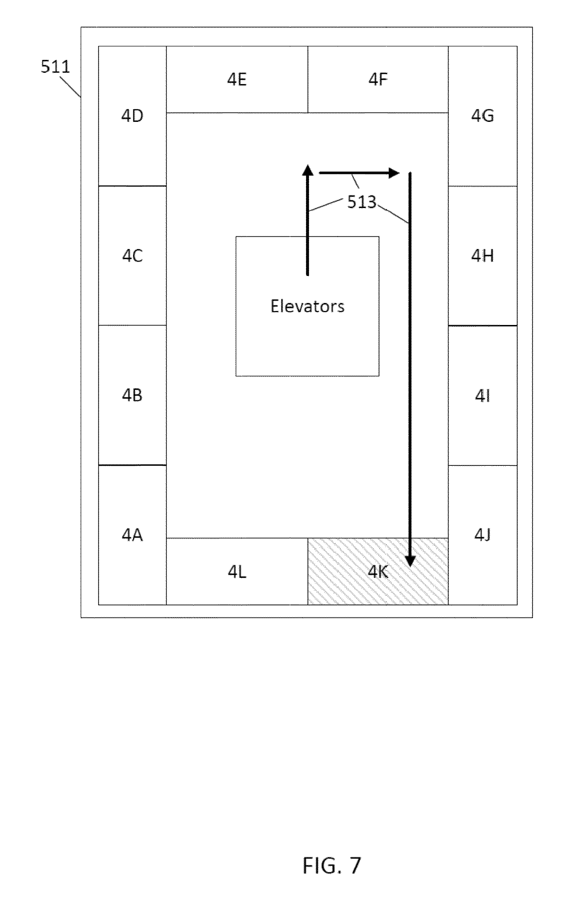

Figure 7 illustrates another example map data 511 from the contact file 401 including navigation in an indoor environment. The example in Figure 7 illustrates a floor of a multi-story building. Many other examples are possible such as a convention center, an airport, a shopping mall, an office building, or another type of building. The map data 511 illustrates an indoor navigation path 513 from the elevator bank to a specific location (e.g., room 4K).

The indoor navigation path 513 is an example of a prerecorded path that a user may record by walking the path or manually entering the path. The indoor navigation path 513 may be an image drawn by the user. The destination in the indoor navigation path 513 may be a business associated with the user. For example, the location 4K may be a store in a mall. The user is the operator of the store and creates the indoor navigation path 513, which may include textual directions in addition or instead of the image. The indoor navigation path is stored in the contact file for the operator or for the business.

Another user has an association with the contact file. The association may be through requesting directions from the website of the business, a social networking link, or through the contact list on a phone. When the user requests navigation to the business, the navigation system provides navigation to the address of the business, which is, for example, outside on the street or near a parking lot. The navigation system further searches the contact database and identifies the contact file. From the contact file, the indoor navigation path 513 is retrieved and displayed to the user, providing additional navigation instructions inside the building to arrive at the exact destination originally requested.

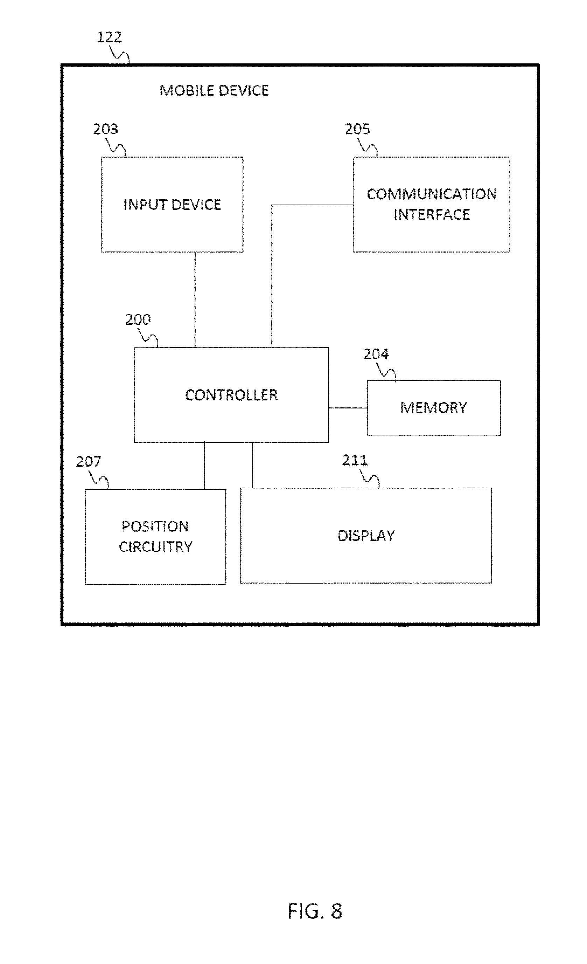

Figure 8 illustrates an exemplary mobile device of the system of Figure 1. The mobile device 122 may be referred to as a navigation device. The mobile device 122 includes a controller 200, a memory 204, an input device 203, a communication interface 205, position circuitry 207, and a display 211. The workstation 128 may include at least a memory and processor and may be substituted for the mobile device.

The memory 204 stores a contact database. The contact database may be associated with a first entity. The contact database may be a social networking service such that an entry in the contact database is included in an account for first entity with a social networking service. The account may advertise goods or services on the social networking service. The contact database may be a contact list from an email account, address book, or a telephone. The contact database includes at least one entry with a prerecorded path that includes data indicative of a route to a location associated with the first entity. The first entity may create and take responsibility for the data within the prerecorded path.

The memory 204, or an external database, stores a geographic database. The geographic database, which is described in more detail below, includes at least one path segment that intersects the prerecorded path of the contact database. The controller 200 is configured to identify one or more path segments to generate a set of navigation instructions to the prerecorded path. The controller 200 may be configured receive location data for the mobile device 122. The controller 200 sets the initial location for the set of navigation instructions based on the location data.

The controller 200 is configured to receive a request for navigation to a destination and derive the set of navigation instructions in response to receipt of the destination. The navigation instructions may lead to an intersection with the prerecorded path. The prerecorded path may be associated with one or more intersection points or junction points with segments in the geographic data.

The controller 200 may append the prerecorded path to the set of navigation instructions, or the controller 200 may display or send the prerecorded path from the contact list without any change in the data. For example, in the case of a prerecorded path including textual directions, the directions may be added to the set of navigation instructions. In the case of a prerecorded path as a media file, the media file may be sent to the mobile device 122 for display to the user.

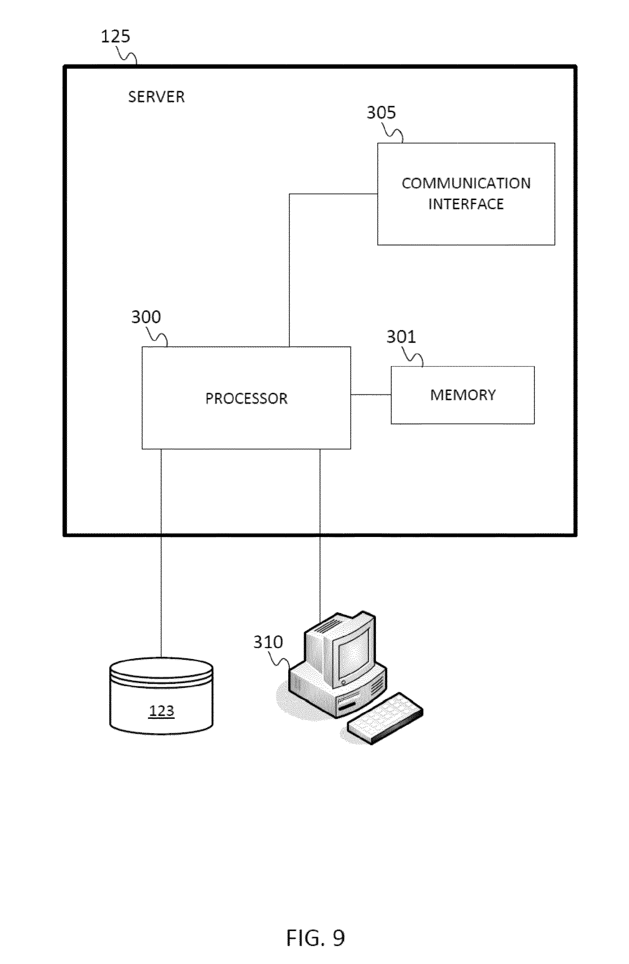

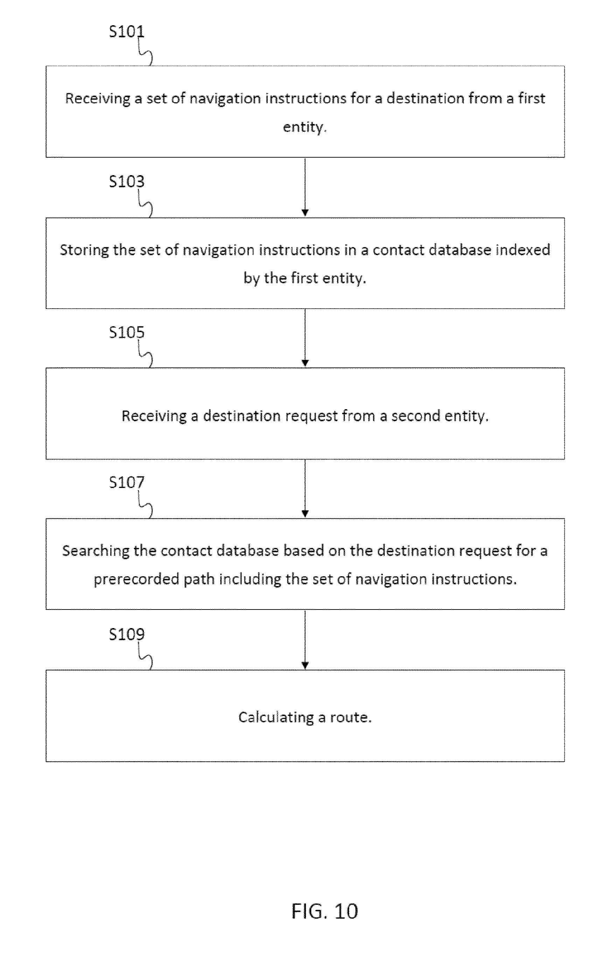

Figure 9 illustrates an exemplary server of the system of Figure 1. The server 125 includes a processor 300, a communication interface 305, and a memory 301. The server 125 may be coupled to a database 123 and a workstation 310. The workstation 310 may be used as an input device for the server 125. In addition, the communication interface 305 is an input device for the server 125. The communication interface 305 receives data indicative of use inputs made via the workstation 128 or the mobile device 122. Figure 10 illustrates an example flowchart for augmenting navigation with a recorded path. The acts in Figure 10 may be performed by the mobile device 122 or any combination of components of the mobile device 122. Additional, different, or fewer acts may be provided. The acts are performed in the order shown or other orders. The acts may also be repeated.

At act S101, the processor 300 is configured to receive a set of navigation instructions for a destination from a first entity. The first entity may be a person, a business, or a point of interest. The set of navigation instructions describe a path to the destination that is omitted from a geographic database or different from the geographic database. The destination may be a point of interest that is omitted from the geographic database. The set of navigation instructions may be recorded by tracking the location and/or orientation of the mobile device 122. Location data may be derived from a GPS device. Orientation data may be derived from a gyrometer installed in the mobile device 122 or mounted in a vehicle associated with the mobile device 122. The gyrometer may be mounted on a steering wheel or other steering mechanism to accurately track turns of the vehicle.

At act S103, the processor 300 is configured to store the set of navigation instructions in a contact database indexed by the first entity. The contact database may be stored in the memory 301. The contact database may be a user database for a social networking service. The processor 300 may be configured to access an entry from the contact database and send the entry to the mobile device 122. In one example, the processor 300 selects the entry in response to a user interaction showing interest in the first entity, or a point of interest associated with the first entity. Interest may be shown by a "like" on the social networking service. The interest may be shown by specifically selecting "send me navigation instructions" or "add to navigation database." The interest may be shown by visiting a webpage. In response to the user interaction showing interest in the first entity, the contact database 401 on the mobile device 122 may be updated with the contact file including the prerecorded path.

At act S105, the processor 300 is configured to receive a destination request from a second entity. The destination request may be made by performing a search in the name of the first entity, or a point of interest associated with the first entity. At act S107, the processor 300 is configured to search the contact database based on the destination request for a prerecorded path including the set of navigation instructions.

The input device 203 may be one or more buttons, keypad, keyboard, mouse, stylist pen, trackball, rocker switch, touch pad, voice recognition circuit, or other device or component for inputting data to the mobile device 122. The input device 203 and the display 211 may be combined as a touch screen, which may be capacitive or resistive. The display 211 may be a liquid crystal display (LCD) panel, light emitting diode (LED) screen, thin film transistor screen, or another type of display.

The positioning circuitry 207 is optional and may be excluded for the map-related functions. The positioning circuitry 207 may include a GPS, Global Navigation Satellite System (GLONASS), or a cellular or similar position sensor for providing location data. The positioning system may utilize GPS-type technology, a dead reckoning-type system, cellular location, or combinations of these or other systems. The positioning circuitry 207 may include suitable sensing devices that measure the traveling distance, speed, direction, and so on, of the mobile device 122. The positioning system may also include a receiver and correlation chip to obtain a GPS signal. Alternatively or additionally, the one or more detectors or sensors may include an accelerometer built or embedded into or within the interior of the mobile device 122. The accelerometer is operable to detect, recognize, or measure the rate of change of translational and/or rotational movement of the mobile device 122. The mobile device 122 receives location data from the positioning system. The location data indicates the location of the mobile device 122.

The database 123 of the system 120 may be a geographic database. The geographic database 123 includes information about one or more geographic regions. Each road in the geographic region is composed of one or more road segments. A road segment represents a portion of the road. Each road segment is associated with two nodes (e.g., one node represents the point at one end of the road segment and the other node represents the point at the other end of the road segment). The node at either end of a road segment may correspond to a location at which the road meets another road, i.e., an intersection, or where the road dead-ends. The road segment data record may also include data that indicate a classification, such as a rank of a road segment that may correspond to its functional class. Example functional classes include arterial roads, collector roads, and local roads. The prerecorded path may include roads outside of the functional classification system. Alternatively, an additional functional classification (e.g., private roads, temporary roads, or personalized roads) may be added to the geographic database to distinguish the prerecorded paths from other segments.

The road segment data may include data identifying what turn restrictions exist at each of the nodes which correspond to intersections at the ends of the road portion represented by the road segment, the name or names by which the represented road segment is known, the length of the road segment, the grade of the road segment, the street address ranges along the represented road segment, the permitted direction of vehicular travel on the represented road segment, whether the represented road segment is part of a controlled access road (such as an expressway), a ramp to a controlled access road, a bridge, a tunnel, a toll road, a ferry, and so on.

The mobile device 122 may provide navigation-related features such as a route calculation application. End users may access a route from an origin to a destination. The route calculation application determines the route for the end user to travel along the road segments to reach the desired destination. In order to calculate a route, the route calculation application is provided with data identifying a starting location (origin) and a desired destination location. In one embodiment, the starting location may be the end user's current position and the destination may be entered by the end user. Given at least the identification of the starting location (origin) and the desired destination location, the route calculation application determines one or more solution routes between the starting location and the destination location. A solution route is formed of a series of connected road segments over which the end user can travel from the starting location to the destination location. When the route calculation application calculates a route, the application accesses the geographic database 123 and obtains data that represent road segments around and between the starting location and the destination location. The road calculation application uses the data to determine at least one valid solution route from the starting location to the destination location. The at least one valid solution route may be displayed to the user in the rendering of the geographic region such that addresses or points of interest along the route may be selected to display street side imagery.

In one embodiment, the route calculation application may attempt to find a solution route that takes the least time to travel. The segment cost or travel time for the particular represented road segment considers the type of road, such as freeway or residential street, speed limit and distance of the segment. In one embodiment, the route calculation application may consider traffic conditions to more accurately reflect actual travel time over the connected road segments. When the route calculation application determines one or more solution routes comprising the series of connected road segments, the travel times for each of the included connected road segments is summed to provide an estimated route travel time. Based on the route travel time, the route calculation application selects the quickest route. Once the route calculation application has selected the route, the route calculation application provides an output in the form of an ordered list identifying a plurality of road segments that form the continuous navigable route between the origin and the destination. In addition, the route calculation program provides an output of an estimated route travel time.

The controller 200 and/or processor 300 may include a general processor, digital signal processor, an application specific integrated circuit (ASIC), field programmable gate array (FPGA), analog circuit, digital circuit, combinations thereof, or other now known or later developed processor. The controller 200 and/or processor 300 may be a single device or combinations of devices, such as associated with a network, distributed processing, or cloud computing.

The memory 204 and/or memory 301 may be a volatile memory or a non-volatile memory. The memory 204 and/or memory 301may include one or more of a read only memory (ROM), random access memory (RAM), a flash memory, an electronic erasable program read only memory (EEPROM), or other type of memory. The memory 204 and/or memory 301 may be removable from the mobile device 100, such as a secure digital (SD) memory card.

The communication interface 205 and/or communication interface 305 may include any operable connection. An operable connection may be one in which signals, physical communications, and/or logical communications may be sent and/or received. An operable connection may include a physical interface, an electrical interface, and/or a data interface. The communication interface 205 and/or communication interface 305 provides for wireless and/or wired communications in any now known or later developed format.

The network 127 may include wired networks, wireless networks, or combinations thereof. The wireless network may be a cellular telephone network, an 802.11, 802.16, 802.20, or WiMax network. Further, the network 127 may be a public network, such as the Internet, a private network, such as an intranet, or combinations thereof, and may utilize a variety of networking protocols now available or later developed including, but not limited to TCP/IP based networking protocols.

Non-transitory computer readable media may be encoded with instructions for performing any of the above acts or functions. While the non-transitory computer-readable medium may be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a usercan interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A method comprising:
receiving a destination request including a destination;
searching a contact database based on the destination request;
receiving at least one prerecorded path from the contact database; and
calculating, using a processor, a route to the destination including the prerecorded path.

2. The method of claim 1, further comprising:
retrieving a contact file associated with the prerecorded path and a recording entity.

3. The method of claim 2, wherein the prerecorded path includes audio or video recorded by the recording entity.

4. The method of claim 1, further comprising:
searching a geographic database based on the destination request, wherein the route includes navigation from the geographic database in addition to the prerecorded path.

5. The method of claim 1, further comprising:
identifying an initial location for the route to the destination; and
calculating an initial path from the initial location to a closest point on the prerecorded path.

6. The method of claim 5, further comprising:
selecting the closest point according to a geometric algorithm or a predetermined array of junction points.

7. The method of claim 1, further comprising:
accessing a social networking service for the prerecorded path.

8. An apparatus comprising:
a contact database storing a plurality of prerecorded paths;
a geographic database storing geographic data; and
a controller configured to receive a request for navigation to a destination and derive a set of navigation instructions based on the geographic data, wherein the controller is configured to access a prerecorded path from the contact database and append the prerecorded path to a set of navigation instructions.

9. The apparatus of claim 8, wherein the contact database and the geographic database are stored in a computer readable medium.

10. The apparatus of claim 8, wherein the prerecorded path includes textual data including directions to the destination or audio data including directions to the destination.

11. The apparatus of claim 8, wherein the destination is associated with a path omitted from the geographic database.

12. The apparatus of claim 8, wherein the controller is configured to identify an initial location for the set of navigation instructions and calculate an initial path from the initial location to a closest point closest to the prerecorded path.

13. The apparatus of claim 12, wherein the controller is configured to select the closest point according to a geometric algorithm or a predetermined array of junction points.

14. The apparatus of claim 8, wherein the controller is configured to search a accessing a social networking service for the prerecorded path.
